(19) 

Europäisches
Patentamt
European
Patent Office
Office européen
des brevets

(11) **EP 1 732 962 B1**

(12) **EUROPEAN PATENT SPECIFICATION**

(45) Date of publication and mention
of the grant of the patent:
**16.07.2008 Bulletin 2008/29**

(51) Int Cl.:
*C08F 265/02* (2006.01)     *C08F 257/02* (2006.01)
*C09D 151/00* (2006.01)     *C08F 2/00* (2006.01)

(21) Application number: **05716225.7**

(22) Date of filing: **18.03.2005**

(86) International application number:
**PCT/EP2005/002942**

(87) International publication number:
**WO 2005/097854 (20.10.2005 Gazette 2005/42)**

(54) **AQUEOUS VINYL OLIGOMER AND VINYL POLYMER COMPOSITIONS**

WÄSSRIGE VINYLOLIGOMER- UND VINYLPOLYMERZUSAMMENSETZUNGEN

COMPOSITIONS AQUEUSES D'OLIGOMERE DE VINYLE ET DE POLYMERE DE VINYLE

(84) Designated Contracting States:
**AT BE BG CH CY CZ DE DK EE ES FI FR GB GR
HU IE IS IT LI LT LU MC NL PL PT RO SE SI SK TR**

(30) Priority: **08.04.2004 GB 0408021**

(43) Date of publication of application:
**20.12.2006 Bulletin 2006/51**

(73) Proprietor: **DSM IP Assets B.V.**
**6411 TE Heerlen (NL)**

(72) Inventors:
 • **SMAK, Yvonne, Wilhelmina**
   **NL-5140 AC Waalwijk (NL)**
 • **OVERBEEK, Gerardus, Cornelis**
   **NL-5140 AC Waalwijk (NL)**
 • **GEUS-DE GROOT, Debby**
   **NL-5140 AC Waalwijk (NL)**
 • **GRIFFIOEN, Jacobus, Willem**
   **NL-5140 AC Waalwijk (NL)**
 • **HÖNEN, Paulus Johannes Maria**
   **NL-5140 AC Waalwijk (NL)**
 • **BÜCKMANN, Alfred Jean Paul**
   **NL-5140 AC Waalwijk (NL)**

(74) Representative: **Schmitt, Maja et al**
   **DSM intellectual Property**
   **DSM IP Assets BV**
   **Geleen Office**
   **PO Box 9**
   **6160 MA Geleen (NL)**

(56) References cited:
   **EP-A- 0 304 788        US-A1- 2002 147 262**

**Description**

The present invention relates to certain aqueous compositions comprising a crosslinkable vinyl oligomer obtained by bulk polymerisation and a vinyl polymer that is more hydrophobic than the vinyl oligomer.

The use of aqueous polymer compositions is well known in the art for numerous applications and in particular for the provision of a binder material in coating applications.

In coating applications such as for example water-borne printing inks, overprint lacquer formulations, paper and film coatings; used in particular in the graphic arts industry, there is a need for the aqueous composition or the resulting coating to have a combination of properties. These include the capability of having a good low minimum film forming temperature (MFFT), a low volatile organic solvent (VOC) content, a viscosity acceptable for the application, stability and reversibility in the polymer of the composition, good chemical and physical resistances and good compatibility with solvents, pigments, pigment concentrates and additives.

Reversibility (sometimes called redispersibility or resolubility) is a property, well known to the printing industry, whereby dry or drying polymer obtained from an aqueous polymer composition is redispersible or redissolvable in that same composition when the latter is applied thereto. Reversibility is defined in more detail below. Reversibility is of great importance in the process of printing which generally involves applying the waterborne ink-formulation by various cylinders (smooth, engraved or flexo diches); these can become blocked with polymer by evaporation of the water and other volatile organic compounds (VOC's) and/or the ink formulation can dry on the roller surface (e.g. during a short stoppage of the process for one reason or another) and this would obviously create problem when the process is restarted if the polymer were not reversible.

EP 0,758,364 discloses an organic solvent free polymer composition comprising an acid functional crosslinkable oligomer prepared by an aqueous emulsion or aqueous solution process and a hydrophobic polymer prepared in the presence of the oligomer by aqueous emulsion polymerisation and a crosslinking agent, where the Tg of the polymer is lower than that of the oligomer. EP 0,304,788 discloses an emulsion polymerisation process using a water soluble copolymer as a dispersant. However a disadvantage of polymerising hydrophilic and hydrophobic monomers in an aqueous environment is that inhomogeneous incorporation may occur, resulting in a loss of for example water, alcohol and detergent resistance and requiring an increased level of crosslinking (which may increase cost) to maintain performance.

EP 0,567,128 discloses a crosslinking aqueous pigment dispersion comprising an aqueous resin dispersion, a pigment, a carbonyl containing copolymer and a hydrazine derivative, prepared using emulsion polymerisation and or solution polymerisation.

EP 0,296,487 discloses an aqueous polymer dispersion comprising a mixture of an acid functional crosslinkable copolymer and a non acid functional polymer and a polyhydrazide, prepared using solution polymerisation. US 5,173,523 discloses an aqueous polymer emulsion comprising a carboxylic acid functional polymer and a second polymer where both are prepared using solution polymerisation. However a disadvantage of solution polymerisation is that the use of solvent necessitates the removal of the solvent which takes time, is costly and presents safety implications.

We have now discovered how to prepare aqueous polymer compositions with improved homogeneity between hydrophilic and hydrophobic monomers, improved reversibility and where the mechanical and physical properties such as for example adhesion, crosslinkability, minimum film forming temperatures, hardness, blocking and chemical resistances are easily tailorable.

According to the present invention there is provided an aqueous composition comprising:

i) at least a crosslinkable vinyl oligomer A with a weight average molecular weight in the range of from 1000 to 80,000 Daltons obtained by bulk polymerisation of:

(a) 5 to 45 wt% of vinyl monomers bearing ionic or potentially ionic water-dispersing groups;
(b) 0 to 30 wt% of vinyl monomers bearing non-ionic water-dispersing groups;
(c) 2 to 25 wt% of vinyl monomers bearing crosslinkable groups;
(d) 0 to 40 wt% of $\alpha$-methyl styrene;
(e) 10 to 93 wt% of vinyl monomers not in (a), (b), (c) or (d);

where (a) + (b) + (c) + (d) + (e) = 100%; and
ii) at least a vinyl polymer B with a weight average molecular weight $\geq$ 5000 Daltons, obtained by polymerisation in the presence of vinyl oligomer A of:

(f) 0 to 5 wt% of vinyl monomers bearing ionic or potentially ionic water-dispersing groups;
(g) 0 to 20 wt% of vinyl monomers bearing non-ionic water-dispersing groups;
(h) 0 to 15 wt% of vinyl monomers bearing crosslinkable groups;

(i) 60 to 100 wt% of vinyl monomers not in (f), (g) or (h);

where (f) + (g) + (h) + (i) = 100%;
where the ratio of vinyl oligomer A to vinyl polymer B is in the range of from 5:95 to 95:5
and more preferably in the range of from 20:80 to 60:40;
where polymer B is more hydrophobic than vinyl oligomer A;
where the weight average molecular weight of vinyl polymer B is more than the weight
average molecular weight of vinyl oligomer A;
iii) 0 to 20 wt% of co-solvent; and
iv) 30 to 90 wt% of water;

where i) + ii) + iii) + iv) = 100%.

The term vinyl oligomer as used herein includes one vinyl oligomer as well as more than one vinyl oligomer.

The term vinyl polymer as used herein includes one vinyl polymer as well as more than one vinyl polymer.

In an embodiment of the present invention the aqueous composition additionally comprises crosslinkable vinyl oligomer C with a weight average molecular weight in the range of from 1000 to 80,000 Daltons obtained by polymerisation of:

(k) 0 to 4.9 wt% of vinyl monomers bearing ionic or potentially ionic water-dispersing groups;
(l) 0 to 30 wt% of vinyl monomers bearing non-ionic water-dispersing groups;
(m) 0 to 20 wt% of vinyl monomers bearing crosslinkable groups;
(n) 45.1 to 100 wt% of vinyl monomers not in (k), (l) or (m);

where (k) + (l) + (m) + (n) = 100%; and
where vinyl polymer B is more hydrophobic than vinyl oligomer C; and
where the weight average molecular weight of vinyl polymer B is more than the weight average molecular weight of vinyl oligomer C.

The preferred relative weight ratios of vinyl oligomer A (= A), vinyl polymer B (= B) and optional vinyl oligomer C (= C) are based on the basis that A + B + C = 100.

Therefore when A + B + C = 100, A is preferably in the range of from 5 to 95, more preferably 7 to 80, most preferably 10 to 50, especially 20 to 60 and most especially 20 to 40. B is preferably in the range of from 5 to 95, more preferably 20 to 90, most preferably 40 to 80 and especially 60 to 75. C is preferably in the range of from 0 to 40, more preferably 3 to 30 and especially 5 to 10. A is preferably present in the same amount or in a greater amount than C, more preferably A is at present in at least twice the amount of C and most preferably A is present in the range of from twice to six times the amount of C. Preferably the amount of A + C is less than the amount of B.

Vinyl oligomer C may be used to affect the particle size of the composition.

The use of a co-solvent is well known in the art and is an organic solvent, which may be water-soluble or water-insoluble, employed in an aqueous composition to improve the drying characteristics thereof. The co-solvent may be used during the preparation of vinyl oligomer A, vinyl polymer B and/or vinyl oligomer C or may be incorporated during the formulation of the composition of the invention. As defined herein co-solvents also include any co-solvent that may be present in any additional components (such as emulsifiers etc) that may be incorporated into the composition of the invention. The composition of the invention may contain a co-solvent or a mixture of co-solvents. Preferably the composition of the invention comprises ≤ 15 wt%, more preferably ≤ 10 wt%, more preferably ≤ 5 wt% and especially 0 wt% of co-solvent. Preferably the composition of the invention comprises 30 to 80 wt%, more preferably 45 to 75 wt% and most preferably 50 to 65 wt% of water.

The vinyl oligomer A, vinyl polymer B and optional vinyl oligomer C are derived from free-radically polymerisable olefinically unsatu rated monomers, which are also usually referred to as vinyl monomers, and can contain polymerised units of a wide range of such monomers, especially those commonly used to make binders for the coatings industry.

Examples of vinyl monomers which may be used to form vinyl oligomer A, vinyl polymer B and optional vinyl oligomer C include but are not limited to vinyl monomers such as 1,3-butadiene, isoprene; polyalkylene glycol di(meth) acrylates such as 1,3-butyleneglycol diacrylate, ethyleneglycol diacrylate; divinyl benzene; styrene, α-methyl styrene, (meth)acrylic amides and (meth)acrylonitrile; vinyl halides such as vinyl chloride; vinylidene halides such as vinylidene chloride; vinyl ethers; vinyl esters such as vinyl acetate, vinyl propionate, vinyl laurate; vinyl esters of versatic acid such as VeoVa 9 and VeoVa 10 (VeoVa is a trademark of Resolution); heterocyclic vinyl compounds; alkyl esters of mono-olefinically unsaturated dicarboxylic acids such as di-n-butyl maleate and di-n-butyl fumarate and in particular, esters of acrylic acid and methacrylic acid of formula $CH_2CR^1$-$COOR^2$ wherein $R^1$ is H or methyl and $R^2$ is optionally substituted alkyl or cycloalkyl of 1 to 20 carbon atoms (more preferably 1 to 8 carbon atoms) examples of which are methyl (meth)acrylate, ethyl (meth)acrylate, butyl (meth)acrylate (all isomers), octyl (meth)acrylate (all isomers), 2-ethylhexyl (meth)acrylate, isopropyl (meth)acrylate and n-propyl (meth)acrylate. Preferred monomers of formula $CH_2=CR^1-COOR^2$ include butyl (meth)acrylate (all isomers), methyl (meth)acrylate, octyl (meth)acrylate (all isomers) and ethyl (meth)acrylate. Particularly preferred vinyl monomers include (meth)acrylate monomers and styrene based monomers.

The vinyl monomers may include vinyl monomers carrying functional groups such as crosslinker groups and/or hydrophilic water-dispersing groups and/or other functional vinyl monomers exemplified below. Such functionality may be introduced directly in the vinyl oligomer and/or vinyl polymer by free-radical polymerisation, or alternatively the functional group may be introduced by a reaction of a reactive vinyl monomer, which is subsequently reacted with a reactive compound carrying the desired functional. Some functional groups may perform more than one function, for example (meth)acrylic acid is usually used as a water-dispersing monomer however it may also act as a crosslinking monomer. Such variations are known to those skilled in the art.

Water-dispersing groups provide the facility of self-dispersibility in water. The water-dispersing groups may be ionic, potentially ionic, non-ionic or a mixture of such water-dispersing groups. Ionic water-dispersing groups need to be in their dissociated (i.e. salt) form to effect their water-dispersing action. If they are not dissociated they are considered as potential ionic groups which become ionic upon dissociation. The anionic water-dispersing groups are preferably fully or partially in the form of a salt in the final composition of the invention. Conversion to the salt form is as described below. Ionic water-dispersing groups include anionic water-dispersing groups such as acid groups, for example phosphoric acid groups, sulphonic acid groups and carboxylic acid groups.

Preferred vinyl monomers providing ionic or potentially ionic water-dispersing groups include but are not limited to (meth)acrylic acid, itaconic acid, maleic acid, β-carboxyethyl acrylate, monoalkyl maleates (for example monomethyl maleate and monoethyl maleate), citraconic acid, styrenesulphonic acid, vinylbenzylsulphonic acid, vinylsulphonic acid, acryloyloxyalkyl sulphonic acids (for example acryloyloxymethyl sulphonic acid), 2-acrylamido-2-alkylalkane sulphonic acids (for example, 2-acrylamido-2-methylethanesulphonic acid), 2-methacrylamido-2-alkylalkane sulphonic acids (for example 2-methacrylamido-2-methylethanesulphonic acid), mono(acryloyloxyalkyl) phosphates (for example mono (acryloyloxyethyl)phosphate) and mono(methacryloyl-oxyalkyl) phosphates (for example, mono(methacryloyloxyethyl) phosphate).

Non-ionic water-dispersing groups may be in-chain, pendant or terminal groups. Preferably non-ionic water-dispersing groups are pendant polyalkylene oxide groups including ethylene oxide segments, propylene oxide segments, butylene oxide segments and/or mixtures thereof. Preferably the polyalkylene oxide group has a Mw from 175 to 5000 Daltons, more preferably from 350 to 2200 Daltons, most preferably from 660 to 2200 Daltons. Preferred vinyl monomers providing non-ionic water-dispersing groups include alkoxy polyethylene glycol (meth)acrylates, preferably having a number average molecular weight of from 350 to 3000. Examples of such monomers which are commercially available include ω-methoxypolyethylene glycol (meth)acrylate and diethylene glycol mono vinyl ether.

Vinyl oligomer A bears functional groups for imparting latent crosslinkability, and vinyl polymer B a nd/or optional vinyl oligomer C may bear functional groups for imparting latent crosslinkability to the composition (so that crosslinking takes place for example after the aqueous com position is subsequently dried) either when combined with a crosslinking agent or by reaction with each other. Vinyl oligomer A may be combined with at least one crosslinking agent by addition of the crosslinking agent after the preparation of vinyl oligomer A and/or after the preparation of vinyl polymer B, said crosslinking agent being reactable with the crosslinkable groups of vinyl oligomer A on subsequent drying of the composition to effect crosslinking. Said crosslinking agent may also be reactable with crosslinkable groups (if present) on the vinyl polymer B. Alternatively if different crosslinkable groups are present on the vinyl polymer B then an additional different crosslinking agent may be added to crosslink vinyl polymer B. To optimise crosslinking efficiency, preferably the crosslinking agent crosslinks in the range of from 40 to 70% of the crosslinkable groups that can react with that crosslinking agent. Too much crosslinking agent may result in residual crosslinking agent and not enough crosslinking agent may result in a soluble resultant coating.

For example, the functional groups for imparting crosslinkability could include keto, aldehyde and/or acetoacetoxy carbonyl groups and the subsequently formulated crosslinker could be a polyamine or polyhydrazide such as adipic acid dihydrazide, oxalic acid dihydrazide, phthalic acid dihydrazide, terephthalic acid dihydrazide, isophorone diamine and 4,7-dioxadecane-1,10-diamine; or a crosslinker carrying semi-carbazide or hydrazine functional groups. Alternatively the polymer could contain hydrazide functional groups and the subsequently formulated crosslinker could contain keto functional groups. An example of a hydrazide group functional molecule is where it is obtained through a hydrazinolysis reaction where an ester group functional molecule is reacted with hydrazine to give a hydrazide molecule which then can react with a keto functional molecule. The functional groups could include carboxyl functional groups and the subsequently formulated crosslinker could comprise aziridine, epoxy or carbodiimide functional groups; or the functional groups could include silane functional groups and the subsequently formulated crosslinker could comprise silane functional groups. Vinyl monomers carrying crosslinker groups include for example allyl, glycidyl or acetoacetoxy esters, acetoacetoxy amides, keto and aldehyde functional vinyl monomers, keto-containing amides such as diacetone acrylamide, and silane functional (meth)acrylic monomers.

Preferred vinyl monomers carrying crosslinker groups are acetoacetoxy ethyl methacrylate (AAEM), diacetone acrylamide (DAAM) and silane functional (meth)acrylic monomers and most preferably DAAM. Examples of silane functional monomers include Silquest A-2171, Silquest A-174, CoatOSil 1757, Silquest A-151 and Silquest A-171 available from OSI Specialty Chemicals (Silquest and CoatOSil are trade marks). Also possible are combinations of AAEM and amine functional silanes such as Silquest A-1100 or A-1101 or combinations of acid functional monomers and epoxy funtional silanes such as Silquest A-186 or A-187. Preferred crosslinking mechanisms include silane functional group crosslinking and keto functional group with hydrazide functional group crosslinking .

Preferably the weight average molecular weight of vinyl oligomer A is in the range of from 3,000 to 60,000 Daltons, more preferably in the range of from 6,000 to 40,000 Daltons and most preferably in the range of from 8,000 to 30,000 Daltons.

The Tg of a polymer (or an oligomer) herein stands for the glass transition temperature and is well known to be the temperature at which a polymer changes from a glassy, brittle state to a rubbery state. Tg values of polymers may be determined experimentally using techniques such as differential scanning calorimetry DSC or calculated using the well-known Fox equation. The calculated Tg of vinyl oligomer A is preferably in the range of from -50 to 150°C. If the vinyl oligomer A comprises (d) 15 to 40 wt% of $\alpha$-methyl styrene, the calculated Tg of vinyl oligomer A is more preferably in the range of from 70 to 150°C. Alternatively if the vinyl oligomer A comprises (d) < 15 wt% of $\alpha$-methyl styrene, the calculated Tg of vinyl oligomer A is preferably in the range of from -20 to 100°C.

Preferably vinyl oligomer A comprises (a) 5 to 40 wt% of vinyl monomers bearing ionic or potentially ionic water-dispersing groups. If the vinyl oligomer A comprises (d) < 15 wt% of $\alpha$-methyl styrene then vinyl oligomer A preferably comprises (a) 5 to 35 wt %, most preferably 6 to 30 wt%, especially 8 to 20 wt % and most especially 8 to 15 wt% of vinyl monomers bearing ionic or potentially ionic water-dispersing groups. Alternatively if the vinyl oligomer A comprises (d) 15 to 40 wt% of $\alpha$-methyl styrene then vinyl oligomer A preferably comprises (a) 20 to 40 wt% of vinyl monomers bearing ionic or potentially ionic water-dispersing groups.

Preferably vinyl oligomer A comprises (b) 0 to 25 wt %, more preferably 0 to 15 wt%, most preferably 0 to 10 wt% and especially 1 to 10 wt% of vinyl monomers bearing non-ionic water-dispersing groups.

Preferably vinyl oligomer A comprises (c) 2 to 20 wt%, more preferably 2 to 15 wt%, more preferably 4 to 12 wt% and especially 4 to 10 wt% of vinyl monomers bearing crosslinker groups.

Preferably vinyl oligomer A comprises (d) 2 to 35 wt%, more preferably 5 to 35 wt% and most preferably 15 to 35 wt% of $\alpha$-methylstyrene. Alternatively vinyl oligomer A preferably comprises (d) 2 to 25wt%, more preferably < 15wt%, most preferably 4 to 12 wt% and especially < 5 wt% of $\alpha$-methylstyrene.

Preferably vinyl polymer B has a weight average molecular weight $\geq$ 60,000 Daltons, more preferably $\geq$ 150,000 Daltons and most preferably $\geq$ 300,000 Daltons.

Preferably the calculated Tg of vinyl polymer B is in the range of from -50 to 120°C, more preferably -20 to 110°C and most preferably 0 to 95°C.

Preferably vinyl polymer B comprises (f) 0 to 5 wt% and more preferably 0 to 3 wt% of vinyl monomers bearing ionic or potentially ionic water-dispersing groups.

Preferably vinyl polymer B comprises (g) 0 to 15 wt%, more preferably 0 to 10 wt% and most preferably 0.5 to 5 wt% of vinyl monomers bearing non-ionic water-dispersing groups.

Preferably vinyl polymer B comprises (h) 0 to 15 wt%, more preferably 1 to 10 wt% most preferably 1 to 8 wt% and especially 2 to 8 wt% of vinyl monomers bearing crosslinkable groups.

Vinyl polymer B is preferably prepared from hydrophobic vinyl monomers such as may be exemplified by styrene, butyl (meth)acrylate (all isomers), 2-ethylhexyl (meth)acrylate, lauryl methacrylate and stearyl methacrylate.

Vinyl polymer B is hydrophobic relative to vinyl oligomer A and optional vinyl oligomer C. By hydrophobic is meant (as is well known by those skilled in the art) a substantially water-insoluble polymer whose insolubility is maintained throughout the pH range.

The hydrophobicity may be measured by the relative acid value of vinyl polymer B to vinyl oligomer A and optional vinyl oligomer C, where vinyl polymer B would have a smaller acid value than vinyl oligomer A or optional vinyl oligomer C. Alternatively hydrophobicity may be defined in terms of interfacial tension of the polymer in water. Thus vinyl polymer B would have a higher interfacial tension than vinyl oligomer A or optional vinyl oligomer C. Hydrophobicity may also be defined in terms of the logP of a polymer (or oligomer) in water. P is the octanol-water partition coefficient and the logP for a polymer with a particular monomer composition is calculated using the following formula:

$$logP = \Sigma \{[(\text{wt\% of monomer})/100] \times (logP \text{ of the monomer}]\}.$$

LogP is described in C. Hansch, Accounts of Chemical Research, (1969), Volume 2, pg 232 to 239. Thus vinyl polymer B would have a higher logP than vinyl oligomer A or optional vinyl oligomer C.

Preferably the weight average molecular weight of vinyl oligomer C is in the range of from 1,000 to 50,000 Daltons, more preferably in the range of from 2,000 to 30,000 Daltons and most preferably in the range of from 3,000 to 10,000 Daltons.

The calculated Tg of vinyl oligomer C is preferably in the range of from -50 to 130°C and more preferably in the range of from -20 to 100°C.

Vinyl oligomer C is preferably more hydrophobic than vinyl oligomer A.

Preferably vinyl oligomer C comprises (k) 0 to 4.5 wt% and more preferably 0 to 2 wt% vinyl monomers bearing ionic or potentially ionic water-dispersing groups.

Preferably vinyl oligomer C co mprises (1) 0 to 20 wt%, more preferably 0 to 9 wt% and most preferably 0.5 to 4 wt% of vinyl monomers bearing non-ionic water-dispersing groups.

Preferably vinyl oligomer C comprises (m) 1 to 10 wt% and more preferably 2 to 8 wt% of vinyl monomers bearing crosslinkable groups.

Preferably vinyl oligomer C comprises (n) 50 to 100 wt% of vinyl monomers not in (k), (l) or (m). Preferably (n) comprises 0 to 40 wt%, more preferably 2 to 25 wt% and more preferably 4 to 12 wt% of α-methylstyrene.

In another embodiment of the present invention there is provided an aqueous composition comprising:

> i) at least a crosslinkable vinyl oligomer A with a weight average molecular weight in the range of from 8000 to 30,000 Daltons obtained by bulk polymerisation of:

>> (a) 20 to 40 wt% of vinyl mono mers bearing ionic or potentially ionic water-dispersing groups;
>> (b) 0 to 10 wt% of vinyl monomers bearing non-ionic water-dispersing groups;
>> (c) 4 to 10 wt% of vinyl monomers bearing crosslinkable groups,

>> more preferably DAAM;

>> (d) 15 to 35 wt% of α-methyl styrene;
>> (e) 5 to 61 wt% of vinyl monomers not in (a), (b), (c) or (d);

> where (a) + (b) + (c) + (d) + (e) = 100%; and
> ii) at least a vinyl polymer B with a weight average molecular weight ≥ 150,000 Daltons, obtained by polymerisation in the presence of vinyl oligomer A of:

>> (f) 0 to 3 wt% of vinyl monome rs bearing ionic or potentially ionic water-dispersing groups;
>> (g) 0 to 10 wt% of vinyl monomers bearing non-ionic water-dispersing groups;
>> (h) 1 to 8 wt% of vinyl monomers bearing crosslinkable groups, more preferably DAAM;
>> (i) 79 to 98 wt% of vinyl monomers not in (f), (g) or (h);

> where (f) + (g) + (h) + (i) = 100%;
> where the ratio of vinyl oligomer A to vinyl polymer B is in the range of from 20:80 to 60:40;
> where polymer B is more hydrophobic than vinyl oligomer A;
> where the weight average molecular weight of vinyl polymer B is more than the weight average molecular weight of vinyl oligomer A;
> iii) 0 to 20 wt% of co-solvent; and
> iv) 30 to 90 wt% of water;

where i) + ii) + iii) + iv) =100%.

In a further embodiment of the present invention there is provided an aqueous composition comprising:

> i) at least a crosslinkable vinyl oligomer A with a weight average molecular weight in the range of from 8000 to 30,000 Daltons obtained by bulk polymerisation of:

>> (a) 8 to 15 wt% of vinyl monomers bearing ionic or potentially ionic water-dispersing groups;
>> (b) 1 to 10 wt% of vinyl monomers bearing non-ionic water-dispersing groups;
>> (c) 4 to 10 wt% of vinyl monomers bearing crosslinkable groups, more preferably DAAM;
>> (d) < 5 wt% of α-methyl styrene;
>> (e) 65 to 87 wt% of vinyl monomers not in (a), (b), (c) or (d);

> where (a) + (b) + (c) + (d) + (e) = 100%; and
> ii) at least a vinyl polymer B with a weight average molecular weight ≥ 150,000 Daltons, obtained by polymerisation in the presence of vinyl oligomer A of:

(f) 0 to 3 wt% of vinyl monomers bearing ionic or potentially ionic water-dispersing groups;
(g) 0 to 10 wt% of vinyl monomers bearing non-ionic water-dispersing groups;
(h) 1 to 8 wt% of vinyl monomers bearing crosslinkable groups, more preferably DAAM;
(i) 79 to 98 wt% of vinyl monomers not in (f), (g) or (h);

where (f) + (g) + (h) + (i) = 100%;
where the ratio of vinyl oligomer A to vinyl polymer B is in the range of from 20:80 to 60:40;
where polymer B is more hydrophobic than vinyl oligomer A;
where the weight average molecular weight of vinyl polymer B is more than the weight
average molecular weight of vinyl oligomer A;
iii) 0 to 20 wt% of co-solvent; and
iv) 30 to 90 wt% of water;

where i) + ii) + iii) + iv) = 100%.

Vinyl oligomer A is prepared by a bulk polymerisation process. Bulk polymerisation of vinyl monomers is described in detail in EP 0,156,170, WO 82/02387, and US 4,414,370.

In general in a bulk polymerisation process a mixture of two or more vinyl monomers are charged continuously into a reactor zone containing molten vinyl oligomer having the same ratio of vinyl monomers as the vinyl monomer mixture - The molten vinyl oligomer/monomer mixture is maintained at a preset temperature to provide a vinyl oligomer of the desired molecular weight. The vinyl oligomer product is pumped out of the reaction zone at the same weight rates as the vinyl monomers are charged to the reaction zone to provide a fixed level of vinyl monomer and vinyl oligomer in the system.

To reduce any unreacted vinyl monomer content of the resultant vinyl oligomer the molten vinyl oligomer may be subjected to separation means known in the art to remove or reduce any unreacted vinyl monomer and/or volatile by-products.

The minimum reaction temperature will vary, depending on the particular monomers charged to the reactor. Generally it may be found that at temperatures below about 175°C, the material formed is too viscous to process efficiently, however depending on the monomers and or solvent used this may not be an issue. At reaction temperatures below about 235°C the weight average molecular weight may increase and further, the uniformity of the vinyl oligomer as shown by the polydispersity of the molecular weight distribution may deteriorate unacceptably. At temperatures above about 310°C, the temperature may have adverse effects on the vinyl oligomer such as discolouration and undesired yellowing. Furthermore such high temperatures may result in the formation of a large volume of very low molecular weight material. In order to obtain a vinyl oligomer A for use in the invention with the desired molecular weight the reaction temperature is preferably maintained from about 135°C to about 310°C, more preferably from about 150°C to 275°C. Within the preferred temperature range it is possible to achieve the most desirable balance of vinyl oligomer A properties, such as molecular weight, polydispersity and purity.

In general, the reaction time or residence time in the reaction zone is controlled by the rate of flow of constituents through the reaction system. The residence time is inversely proportional to flow rate. It has been found that at a given temperature, the molecular weight of the vinyl oligomer decreases as the residence time increases. The particular flow rate selected will depend upon the reaction temperature, vinyl monomers, desired molecular weight and desired polydispersity.

To prepare vinyl oligomer A a conventional free-radical-yielding initiator may be used. Suitable free-radical-yielding initiators include inorganic peroxides such as K, Na or ammonium persulphate, hydrogen peroxide, or percarbonates; organic peroxides, such as acyl peroxides including e.g. benzoyl peroxide, alkyl hydroperoxid es such as t-butyl hydroperoxide and cumene hydroperoxide; dialkyl peroxides such as di-t-butyl peroxide; peroxy esters such as t-butyl perbenzoate and the like; mixtures may also be used. The peroxy compounds are in some cases advantageously used in combination with suitable reducing agents (redox systems) such as Na or K pyrosulphite or bisulphite, and isoascorbic acid. Metal compounds such as Fe.EDTA (EDTA is ethylene diamine tetracetic acid) may also be usefully employed as part of the redox initiator system. Azo functional initiators may also be used. Preferred azo initiators include azobis(is obutyronitrile) and 4,4'-azobis(4-cyanovaleric acid). The amount of initiator or initiator system used is conventional, e.g. within the range 0.05 to 6 wt% based on the total vi nyl monomers used. Preferred initiators include ammonium persulphates, sodium persulphates, potassium persulphates, azobis(isobutyronitrile) and/or 4,4'-azobis(4-cyanovaleric acid).

The use of certain vinyl monomers may also generate free-radicals. For example diacetone acrylamide generates free-radicals at temperatures above about 110°C, thereby causing autopolymerisation and thus may negate the need for any additional free-radical initiators.

Optionally, to prepare the vinyl oligomer A, a chain transfer agent may be added to control the molecular weight. Suitable chain transfer agents include mercaptans such as n-dodecylmercaptan, n-octylmercaptan, t-dodecylmercaptan, mercaptoethanol, iso-octyl thioglycolate, $C_2$ to $C_8$ mercapto carboxylic acids and esters thereof such as 3-mercaptopropionic acid and 2-mercaptopropionic acid; and haloge nated hydrocarbons such as carbon tetrabromide and bromotrichloromethane. Preferably 5 wt%, more preferably 3 wt% and most preferably 1 wt% of chain transfer agent based on the weight of vinyl monomers required is used.

Alternatively diarylethene may be added to control the molecular weight. The use of diarylethene is described in detail in W.Bremser et al, Prog.Org.Coatings , 45, (2002), 95, and JP3135151, DE10029802 and US2002/0013414, incorporated herein by reference. Examples of diarylethene include but are not limited to diphenylethene. Preferably $\leq$ 5 wt%, more preferably $\leq$ 3 wt%, especially $\leq$ 3 wt% and most especially 0.5 to 3 wt % of diarylethene, based on the weight of vinyl monomers required is used.

Optionally a vinyl oligomer A with a terminal unsaturated group may be prepared in the presence of a catalytic chain-transfer agent. Use of a catalytic chain-transfer agent allows control over the molecular weight of the vinyl oligomer A as well as creating terminal unsaturated groups. In catalytic chain transfer polymerisation (CCTP) a free-radical polymerisation is carried out using a catalytic amount of a selected transition metal complex acting as a catalytic chain transfer agent (CCTA), and in particular a selected cobalt chelate complex. For example N.S. Enikoloypan et al, J. Polym.Chem.Ed, Vol 19, 879 (1981), discloses the use of cobalt II porphyrin complexes as cha in transfer agents in free-radical polymerisation, while US 4,526,945 discloses the use of dioxime complexes of cobalt II for such a purpose. US 4,680,354, EP 0,196,783, EP 0,199,436 and EP 0,788,518 describe the use of certain other types of cobalt II chelates as chain transfer agents for the production of oligomers of olefinically unsaturated monomers by free radical polymerisation. WO 87/03605 on the other hand claims the use of certain cobalt III chelate complexes for such a purpose, as well as the use of certain chelate complexes of other metals such as iridium and rhenium.

Vinyl polymer B is preferably prepared by free-radical polymerisation, although in some circumstances anionic polymerisation may be utilised. The free-radical polymerisation can be performed by techniques well known in the art, for example, as emulsion polymerisation, suspension polymerisation or bulk polymerisation. Furthermore the free-radical polymerisation may be carried out as a batch, multi step, semi-continuous or as a gradient (also known as power feed) polymerisation process. Preferably vinyl polymer B is prepared by emulsion polymerisation and/or bulk polymerisation. Up to 50 wt% of vinyl polymer B may be prepared by a bulk polymerisation process as described above for oligomer A. More preferably vinyl polymer B is prepared by emulsion polymerisation. Optional vinyl oligomer C may be prepared by a free-radical emulsion, suspension or bulk polymerisation.

The vinyl monomers required for vinyl polymer B are added to the vinyl oligomer A and are preferably polymerised in the presence of a free-radical-yielding initiator as described above. Molecular weight control for vinyl polymer B and optional oligomer C additional to that provided by catalytic chain transfer agents may be provided by using chain transfer agents and/or catalytic chain transfer agents as exemplified above.

In an embodiment of the present invention there are provided non-limiting examples of processes such as process X, Y and Z for the preparation of an aqueous composition according to the present invention.

Process X comprises the steps:

I) bulk polymerising vinyl monomers (a), (b), (c), (d) and (e) to obtain vinyl oligomer A;
II) polymerising up to 50 wt% of vinyl monomers (f), (g), (h) and (i) in the presence of vinyl oligomer A prepared in step I) to form vinyl polymer B;
III) dispersing vinyl oligomer A, vinyl polymer B and remaining monomers (f), (g), (h) and (i) in water, optionally in the presence of a co-solvent and/or neutralising agent; and
IV) polymerising remaining monomers (f), (g), (h) and (i).

Process Y comprises the steps:

I) bulk polymerising vinyl monomers (a), (b), (c), (d) and (e) to obtain vinyl oligomer A;
II) dispersing vinyl oligomer A in water, optionally in the presence of a co-solvent and/or neutralising agent;
III) polymerising vinyl monomers (f), (g), (h) and (i) in the presence of vinyl oligomer A prepared in step II) to form vinyl polymer B.

Process Z comprises the steps:

I) bulk polymerising vinyl monomers (a), (b), (c), (d) and (e) to obtain vinyl oligomer A;
II) adding vinyl monomers (f), (g), (h) and (i) to vinyl oligomer A prepared in step I;
III) dispersing vinyl oligomer A and vinyl monomers (f), (g), (h) and (i), in water, optionally in the presence of a co-solvent and/or neutralising agent;

IV) polymerising vinyl monomers (f), (g), (h) and (i) in the presence of vinyl oligomer A prepared in step III) to form vinyl polymer B.

Optional vinyl oligomer C may be prepared by pre-polymerisation of vinyl monomers (k), (I), (m) and (n) and subsequent admixing with vinyl oligomer A and/or vinyl polymer B. Alternatively optional vinyl oligomer C may be prepared by the polymerisation of vinyl monomers (k), (I), (m) and (n) in the presence of vinyl oligomer A.

Vinyl oligomer A and optional vinyl oligomer C may contain sufficient water-dispersing groups to render the vinyl oligomer A and optional vinyl oligomer C partially or fully soluble in an aqueous medium, if necessary by neutralisation of any acid functional groups. This may be achieved for example by adjusting the pH of the aqueous medium. Suitable neutralising agents are bases, examples of which include organic bases such as trialkyl amines (e.g. triethyl amine, tributyl amine), morpholine and alkanol amines, and inorganic bases, examples of which include ammonia, NaOH, KOH and LiOH. Neutralisation may be carried out before or after dispersion in water.

Surfactants can be utilised in order to assist in the dispersion of the vinyl oligomer A and/or vinyl polymer B and optional vinyl oligomer C in water (even if vinyl oligo mer A and/or optional vinyl oligomer C are self-dispersible). Suitable surfactants include but are not limited to conventional anionic and/or non-ionic surfactants and mixtures thereof such as Na, K and $NH_4$ salts of dialkylsulphosuccinates, Na, K and $NH_4$ salts of sulphated oils, Na, K and $NH_4$ salts of alkyl sulphonic acids, Na, K and $NH_4$ alkyl sulphates, alkali metal salts of sulphonic acids; fatty alcohols, ethoxylated fatty acids and/or fatty amides, and Na, K and $NH_4$ salts of fatty acids such as Na stearate and Na oleate. Other anionic surfactants include alkyl or (alk)aryl groups linked to sulphonic acid groups, sulphuric acid half ester groups (linked in turn to polyglycol ether groups), phosphonic acid groups, phosphoric acid analogues and phosphates or carboxylic acid groups. Non-ionic surfactants include polyglycol ether compounds and preferably polyethylene oxide compounds as disclosed in "Non-Ionic Surfactants - Physical Chemistry" edited by M.J. Schick, M. Decker 1987. The amount of surfactant used is preferably 0 to 15% by weight, more preferably 0 to 8% by weight, still more preferably 0 to 5% by weight, especially 0.1 to 3% by weight and most especially 0.3 to 2% by weight based on the weight of vinyl oligomer A, vinyl polymer B and optional vinyl oligomer C.

The aqueous composition of the invention may contain conventional ingredients, some of which have been mentioned above; examples include pigments, dyes, emulsifiers, surfactants, plasticisers, thickeners, heat stabilisers, levelling agents, anti-cratering agents, fillers, sedimentation inhibitors, UV absorbers, antioxidants, drier salts, co-solvents, wetting agents, matting agents and the like introduced at any stage of the production process or subsequently. It is possible to include an amount of antimony oxide in the dispersions to enhance the fire retardant properties.

If desired the aqueous composition of the invention can be used in combination with other polymer compositions, which are not according to the invention.

The aqueous composition of the present invention may be applied to a variety of substrates including wood, board, metals, glass, cloth, leather, paper, plastics, metallised plastics, foam and the like, by any conventional method including brushing, flow coating, spraying, flexo printing, gravure printing, ink-jet printing and the like, in particular other graphic arts application techniques. The aqueous carrier medium is removed by natural drying or accelerated drying (by applying heat) to form a coating.

Accordingly, in a further embodiment of the invention there is provided a substrate carrying a coating, a printing ink and/or an overprint lacquer obtainable from an aqueous composition of the present invention.

The present invention is now illustrated by reference to the following examples. Unless otherwise specified, all parts, percentages and ratios are on a weight basis. The term comparative means that it is not according to the invention and is denoted with a C.

Abbreviations used:

| MMA | = methyl methacrylate |
| MAA | = methacrylic acid |
| AA | = acrylic acid |
| BA | = butyl acrylate |
| S | = styrene |
| αMS | = α-methyl styrene |
| DAAM | = diacetone acrylamide |
| 2-EHA | = 2-ethylhexylacrylate |
| t-BHPO | = t-butylhydroperoxide |
| iAA | = i-ascorbic acid |

AMPS = ammonium persulfate
MPEG 350 = methoxyPEG 350 methacrylate
EtOH = ethanol
NaOH = sodium hydroxide
ADH = adipic acid dihydrazide

<u>Vinyl oligomer A preparation</u>

<u>Reactor configuration for bulk polymerisation</u>

A tube reactor was used to prepare oligomers *via* a bulk process. 0.1% di-tertbutyl peroxide by weight of vinyl monomers was used as initiator, unless specified otherwise. The temperature at the inlet of the tube was around 200°C. Vinyl monomers were fed via the inlet to the tube. The temperature at the outlet of the tube was around 220°C, unless specified otherwise. The pressure in the system was between 8 and 15 bar (800 kNm$^{-2}$ to 1500 kNm$^{-2}$ ). The vinyl monomer flow was set at 25 cm$^3$/min and the reaction time was about 18 minutes. The compositions and properties of vinyl oligomer A (vinyl oligomers 2, 3 and 6 and comparative vinyl oligomers 1, 4 and 5) prepared by bulk polymerisation are listed in Table 1 below.

Table 1

| | CVO1[1] | VO2 | VO3 | CVO4[2] | CVO5[3] | VO6 |
|---|---|---|---|---|---|---|
| S | 38 | 32 | 25 | 14 | 36 | - |
| $\alpha$MS | 30 | 30 | 30 | 50 | 30 | - |
| MMA | - | - | - | - | - | 37 |
| BA | - | - | - | - | - | 47 |
| MAA | - | - | - | - | 2 | 10 |
| AA | 32 | 32 | 15 | 30 | - | - |
| DAAM | - | 6 | 10 | 6 | 6 | 6 |
| MPEG 350 | - | - | 20 | - | 6 | - |
| 2-EHA | - | - | - | - | 20 | - |
| Conversion % | 96 | 94.4 | 90 | 92 | 70 | 91 |
| Acid value mg KOH/g | 242 | 232 | 136 | 234 | * | 69 |
| Mw kDa | 17 | 17 | 21 | 13 | 23 | 19 |

* = not soluble therefore not measured          Da = Daltons = g/mol
[1] no crosslinkable groups          [2] excess $\alpha$MS          [3] < 5% ionic

<u>Reactor configuration for emulsion polymerisation</u>

A 2 litre three necked round bottom flask was used with a stirrer, condenser and a temperature probe. A nitrogen atmosphere was used during the polymerisation. The levels of $\alpha$-methylstyrene used for making the vinyl oligomers by a bulk polymerisation process could not be used in an emulsion polymerisation process and hence the $\alpha$-methylstyrene was replaced by styrene. Mercaptanes were used to control the molecular weight in emulsion polymerisation

<u>Comparative vinyl oligomer 7 via emulsion polymerisation (CVO7)</u>

Comparative vinyl oligomer 7 is an emulsion equivalent to vinyl oligomer 2. To the reactor was added water (437.9 g), Akypolsal NLS (surfactant, ex KAO, 13.0 g), 3-mercaptopropionic acid (0.14 g) and AA (2.8g). The content of the reactor was heated to 85°C. At 85°C AMPS (9.9 g of a 10% solution in water) was added to the reactor. After 10 minutes at 85°C, a feed containing S (109.5 g), AA (56.5 g) and DAAM (10.6 g) was added to the reactor over 2 hours at 85°C. Simultaneously with the feed, AMPS (27.5 g of a 1.5% solution in water) was added to the reactor over 135 minutes. The feed tank and line was rinsed with 37.5 g water (monomer rinse). 2 hours after the feed was completed, ammonia (48.0 g, 25% in water) was added to the reactor at 85°C.

The neutralised comparative vinyl oligomer 7 (CVO7) had a pH of 7.2, a Mw of 18kDa and a solids content of 25.3%.

Comparative vinyl oligomer 8 via emulsion polymerisation (CVO8)

Comparative vinyl oligomer 8 is an emulsion equivalent of vinyl oligomer 6. To the reactor was added water (406.0 g) and Aerosol GPG (surfactant, ex Cytec Industries, 0.5 g). The content of the reactor was heated to 70°C. At 70°C, 10% of a vinyl monomer feed comprising water (84.9 g), Aerosol GPG (1.5g), 3-mercaptopropionic acid (4.3 g), MMA (67.0g), BA (85.1g) MAA (18.1g) and DAAM (10.9g). The reactor was heated to 75°C and AMPS (0.16 g in 10.8 g of water) was added to the reactor. The reactor was heated to 85°C and the remainder of the vinyl monomer feed was added to the reactor over 1 hour. The monomer rinse was 12.5 g water. An initiator feed containing AMPS (0.38 g in 25.2 g of water) was added to the reactor over 75 minutes. The reactor was held at 85°C for 30 minutes, then ammonia (15.6 g, 25%) in water (10.6 g) was added to the reactor at 85°C. The neutralised comparative vinyl oligomer 8 (CVO8) had a pH of 7.2, a Mw of 21 kDa and a solids content of 24.8%.

Preparation of vinyl polymer B in the presence of vinyl oligomer A

Comparative Example 1

The reactor for the emulsion polymerisation was charged with an alkaline solution of comparative vinyl oligomer 1 (CVO1) (350.1 g, 28% solids, pH 8.4) and Akyporox 111/400V (surfactant, ex KAO) (4.8 g). The content of the reactor was heated to 80°C and AMPS (2.9 g, 10% solution in water, pH>8) was added to the reactor. Then a vinyl monomer feed containing MMA (46.0 g), BA (51.9 g) was added to the reactor over 2 hours at 80°C. Simultaneously an initiator feed containing AMPS (21.4 g, 5% solution in water, pH>8) was added to the reactor over 135 minutes. The monomer rinse was water (20.5 g).
The reactor was kept at 80°C for 30 minutes before the post reaction comprising adding t-BHPO (0.18 g, 30%) and then adding iAA (1.0 g, 5% solution in water, pH>7) over 15 minutes. This procedure was repeated.
The acid value of vinyl polymer B (VP1) was 0 mgKOH/g and the Mw was 150 kDa. The resultant composition (CVO1-VP1) had a solids content of 36.8%, a vinyl oligomer A : vinyl polymer B solids ratio of 50:50 and a pH of 7.2.

Example 2

The same process as for Comparative Example 1 was used with the following differences: alkaline solution of vinyl oligomer 2 (VO2) (347.6 g, 28.2% solids, pH 8.6); vinyl monomer feed MMA (46.0 g), BA (51.9 g); initiator feed AMPS (21.4 g, 2.5% solution in water, pH>8); The monomer rinse was water (22.7g).
The acid value of vinyl polymer B (VP2) was 0 mgKOH/g and the Mw of VP2 was 150 kDa. The resultant composition (VO2-VP2) had a solids content of 37.3%, a vinyl oligomer A : vinyl polymer B solids ratio of 50:50 and a pH of 7.4.

Example 3

The same process as for Comparative Example 1 was used with the following differences: alkaline solution of vinyl oligomer 3 (VO3) (255.4 g, 26.1% solids, pH 8); Akyporox 111/400V (2.9 g); AMPS (1.7 g, 10%); vinyl monomer feed MMA (27.7 g), BA (31.1 g); initiator feed AMPS (6.4 g, 5% solution in water, pH>8); the monomer rinse was water (3.3g); post reaction t-BHPO (0.1g, 30%); iAA (0.6g, 5%).
The acid value of vinyl polymer B (VP3) was 0 mgKOH/g. The resultant composition (VO3-VP3) had a solids content of 36.5%, a vinyl oligomer A : vinyl polymer B solids ratio of 50:50 and a pH of 7.4.

Example 4

The same process as for Comparative Example 1 was used with the following differences: alkaline solution of vinyl oligomer 3 (VO3) (255.4 g, 26.1% solids, pH 8); Akyporox 111/400V (2.9 g); AMPS (1.7 g, 10%); vinyl monomer feed MMA (26.2 g), BA (30.9 g), DAAM (1.8 g); initiator feed AMPS (6.4 g, 5% solution in water, pH>8); the monomer rinse was water (3.3g); post reaction t-BHPO (0.1g, 30%); iAA (0.6g, 5%).
The acid value of vinyl polymer B (VP4) was 0 mgKOH/g. The resultant composition (VO3-VP3) had a solids content of 35.6%, a vinyl oligomer A : vinyl polymer B solids ratio of 50:50 and a pH of 7.4.

Comparative example 5

The same process as for Comparative Example 1 was used with the following differences: alkaline solution of comparative vinyl oligomer 4 (CVO4) (210.1 g, 28% solids, pH 8); Akyporox 111/400V (2.9 g); AMPS (1.7 g, 10%); vinyl monomer feed MMA (27.7 g), BA (31.1 g); initiator feed AMPS (6.4 g, 5% solution in water, pH>8); the monomer rinse was water (18.6g);post reaction t-BHPO (0.1g, 30%); iAA (0.6g, 5%).
The acid value of vinyl polymer B (VP5) was 0 mgKOH/g. The resultant composition (CVO4-VP5) had a solids content of 37.4%, a vinyl oligomer A: vinyl polymer B solids ratio of 50:50 and a pH of 7.4.

Example 6

The same process as for Comparative Example 1 was used with the following differences: alkaline solution of vinyl oligomer 6 (VO6) (380.3 g, 17.4% solids, pH 8); Akyporox 111/400V (3.2 g); water (39.4 g) AMPS (1.9 g 10%); vinyl monomer feed MMA (29.9 g), BA (34.7 g), DAAM (2.0 g); initiator feed AMPS (7.2 g, 5% solution in water, pH>8); the monomer rinse was water (18.6g); post reaction t-BHPO (0.1g, 30%); iAA (0.7g, 5%).
The acid value of vinyl polymer B (VP6) was 0 mgKOH/g. The resultant composition (VO6-VP6) had a solids content of 27.1%, a vinyl oligomer A : vinyl polymer B solids ratio of 50:50 and a pH of 8.5.

Comparative Example 7

Comparative Example 7 is comparable to Example 6 except that comparative vinyl oligomer 8 (CVO8) was prepared by emulsion polymerisation.
The same process as for Comparative Example 1 was used with the following differences: alkaline solution of comparative vinyl oligomer 8 (CVO8) (375.5 g, 24.8% solids, pH 7.2); Akyporox 111/400V (4.5 g); AMPS (2.7 g, 10%); vinyl monomer feed MMA (41.5 g), BA (48.9 g), DAAM (2.8 g); initiator feed AMPS (10.2 g, 5% solution in water, pH>8); the monomer rinse was water (11.5g); post reaction t-BHPO (0.2g, 30%); iAA (1.0g, 5%).
The acid value of vinyl polymer B (VP7) was 0 mgKOH/g.The resultant composition (CVO8-VP7) had a solids content of 36.8%, a vinyl oligomer A : vinyl polymer B solids ratio of 50:50 and a pH of 8.6.

Example 8

The same process as for Comparative Example 1 was used with the following differences: alkaline solution of vinyl oligomer 2 (VO2) (633.2 g, 25.5% solids, pH 9); Akyporox 111/400V (11.5 g); water (46.3 g) AMPS (19.1 g, 10.8%); vinyl monomer feed 2-EHA (149.6 g), BMA (199.4g), BA (149.6 g), water (46.3 g); the monomer feed took 75 minutes; Akyporox 111/400V (11.5 g); initiator feed AMPS (87.2 g, 5% solution in water, pH>8); the initiator feed took 90 minutes; the monomer rinse was water (11.5g); post reaction t-BHPO (9.0g, 30%) was added at room temperature; iAA (13.3g, 5%); only one post reaction was used.
The acid value of vinyl polymer B (VP8) was 0 mgKOH/g and the Mw was 15000kDa. The resultant composition (VO2-VP8) had a solids content of 41.8%, a vinyl oligomer A: vinyl polymer B solids ratio of 25:75 and a pH of 8.7.

Comparative Example 9

Comparative Example 9 is comparable to Example 8 except that comparative vinyl oligomer 7 (CVO7) was prepared by bulk polymerisation.
The same process as for Comparative Example 1 was used with the following differences: alkaline solution of comparative vinyl oligomer 7 (CVO7) (422.2 g, 25.5% solids, pH 9); Akyporox 111/400V (7.7 g); AMPS (12.8 g, 10.8%); vinyl monomer feed 2-EHA (99.7 g), BMA (133.0g), BA (99.7 g), water (30.9 g), Akyporox 111/400V (7.7 g); the monomer feed took 75 minutes; initiator feed AMPS (55.1 g, 5% solution in water, pH>8); the initiator feed took 90 minutes; the monomer rinse was water (7.7 g); post reaction t-BHPO (6.0g, 30%) was added at room temperature; iAA (8.9 g, 5%). Only one post reaction was used.
The acid value of vinyl polymer B (VP9) was 0 mgKOH/g and the Mw was 85000kDa. The resultant composition (CVO7-VP9) had a solids content of 32.9%, a vinyl oligomer A : vinyl polymer B solids ratio of 25:75 and a pH of 8.4.

Example 10

The same process as for Comparative Example 1 was used with the following differences: alkaline solution of vinyl oligomer 6 (VO6) (511.9 g, 21.1% solids, pH 9); Akyporox 111/400V (7.7 g); water (30.9); AMPS (12.8 g, 10.8%); vinyl monomer feed 2-EHA (99.7 g), MMA (61.6), DAAM (13.3 g), BMA (133.0g), BA (25.3 g), water (105 g), Akyporox 111/400V (7.7 g); the monomer feed took 75 minutes; initiator feed AMPS (55.1 g, 5% solution in water, pH>8); the initiator feed took 90 minutes; the monomer rinse was water (7.7 g); post reaction t-BHPO (6.0g, 30%) at room temperature; iAA (8.9 g, 5%). Only one post reaction was used.

The acid value of vinyl polymer B (VP10) was 0 mgKOH/g and the Mw was 1800 kDa. The resultant composition (VO6-VP10) had a solids content of 42.0%, a vinyl oligomer A : vinyl polymer B solids ratio of 25:75 and a pH of 7.9.

Comparative Example 11

Comparative Example 11 is comparable to Example 10 except that comparative vinyl oligomer 8 (CVO8) was prepared by emulsion polymerisation.

The same process as for Comparative Example 1 was used with the following differences: alkaline solution of comparative vinyl oligomer 8 (CVO8) (459.3 g, 24.8 % solids, pH 7.2 ); Akyporox 111/400V (7.7 g); water (30.9); AMPS (12.8 g, 10.8%); vinyl monomer feed 2-EHA (99.7 g), MMA (61.6), DAAM (13.3 g), BMA (133.0g), BA (25.3 g), water (105 g), Akyporox 111/400V (7.7 g); the monomer feed took 75 minutes; initiator feed AMPS (55.1 g, 5% solution in water, pH>8); the initiator feed took 90 minutes; monomer feed line rinse water (7.7 g); post reaction t-BHPO (6.0g, 30%) at room temperature; iAA (8.9 g, 5%). Only one post reaction was used.

The acid value of vinyl polymer B (VP11) was 0 mgKOH/g and the Mw was 5000kDa. The resultant composition (CV08-VP11) had a solids content of 43.4%, a vinyl oligomer A : vinyl polymer B solids ratio of 25:75 and a pH of 7.4.

Performance:

The Examples prepared above were evaluated using a range of tests (1) to (9) as described below.

The scores given were from 1 to 5 where 1 = very bad and 5 = excellent. The results of the tests (1) to (9) are shown in Tables 2 to 7 below.

(1) Adhesion test with tape

A strip of adhesive tape (Sellotape™, 25 mm; type Clear 1109 from DRG, UK or Scotch Magic™ tape) was applied onto the printed substrate whilst pressing it thoroughly in place by hand. Any bubbles of entrapped air were removed. The adhesive tape was then removed by hand and the degree of adhesion was assessed visually.

(2) Wet wrinkle test

(2.1) Without exposure in cold water: The printed test substrates were folded widthways (in a concertina manner) at least 5 times. The folded part was wrinkled for 10 seconds with both hands under cold running water. After patting the water carefully away with a towel, the degree of damage and loss of ink, which constitutes a measure for the wet wrinkle sensitivity, was assessed visually.

(2.2) With exposure in cold water: The printed test substrates were partly placed in a cup filled with cold water (approx. 10°C). After 20 minutes of exposure the substrates were taken out of the water. The part that was in the water was folded widthways (in a concertina manner) at least 5 times. The folded part was wrinkled for 10 seconds with both hands under cold running water. After patting the water carefully away with a towel, the degree of damage and loss of ink, which constitutes a measure for the wet wrinkle sensitivity, was assessed visually.

(3) Satra rub test

A Satra rub fastness tester STM 462 (Satra Technology Center, UK) was used for the Satra rub test. The Satra rub resistance was determined using a 24.5N weight and felt pads soaked in water for 30 minutes. A range of rotations was used and the damage to the coating/ink was assessed visually.

(4) Chemical resistances (spot test)

A small amount of cotton wool was placed on the substrate to be tested and by means of a pipette, about 10 drops of the liquid used for the test was dripped on the cotton wool, covered with a watch glass and left for the indicated time at room temperature. Thereafter the watch glass and the cotton wool was removed and any remaining liquid was patted away with a tissue. The damage done to the substrate was assessed visually.

(5) RK-Coater trials

These trials were done to determine the printability properties of the example compositions when printed with an RK-coater (ex RK Print-Coat Instruments Ltd) with a flexo unit. This gave an indication of printing work produced on industrial scale. The resultant dry ink layer was assessed on wetting behaviour and transfer.

(5.1) Wetting behaviour

Wetting is the ability of ink to wet a film substrate with a low surface tension. This was assessed visually to see if the ink composition printed onto the substrate covered the whole surface area that had been printed or if the applied print had reduced in size or formed droplets.

(5.2) Transfer

This is the assessment of the transfer of the ink from an anilox (an engraved cylinder) to a rubber roller, which prints the ink onto a substrate. Inks with equal amounts of pigment were compared and the print layer with the highest colour-strength was considered to have the best transfer performance.

(5.3) Cleaning

Within 1 minute after printing, the flexo unit was first cleaned with water and then with a cleaning medium containing: dipropyleneglycol monomethylether (DPM) (10%), dimethyl ethanol amine (DMEA) (1%), CIF (common Dutch detergent) (10%) and water (79%).
The cleaning performance with water or the cleaning medium of the anilox and the rubber roller were assessed visually.

(6) Hand Coater trials

Hand coater trials were carried out with a K-control coater type K-101 (ex RK Print-Coat Instruments Ltd) with an anilox (an engraved cylinder). A couple of droplets of the ink were placed between the rubber roller and the chosen anilox and pressed forward on the control coater with the chosen speed and pressure on the chosen substrate. The dry ink layer was assessed on its wetting behaviour and transfer.
The numbers in the format X/Y given after the transfer (6.2) and wetting (6.1) properties in Table 6 refer to the type of anilox used: X is the number of cells per linear inch (2.51 cm), Y refers to $mm^3/inch^2$ ($mm^3/2.51\ cm^2$) i.e. the volume of ink that can be carried by the anilox.

(6.1) Wetting behaviour

Wetting is the ability of ink to wet a film substrate with a low surface tension. This was assessed visually to see if the ink composition printed onto the substrate covered the whole surface area that had been printed or if the applied print had reduced in size or formed droplets.

(6.2) Transfer

This is the assessment of the transfer of the ink from an anilox (an engraved cylinder) to a rubber roller, which prints the ink onto a substrate. Inks with equal amounts of pigment were compared and the print layer with the highest colour-strength was considered to have the best transfer performance.

(7) Reversibility

An ink was cast onto a test card and dried. A drop of the same ink formulation was put on the dried film. After a period of time (e.g. 10 seconds), the drop was removed with a wet tissue. This period of time was then increased until the dried film was completely redissolved by the drop i.e. resolubility of the formulation had occurred and the time needed to completely resolubilise the formulation was measured.

(8) Gloss

Gloss was measured using a micro-Tri-gloss (ex Byk Gardner). The test sample for example an ink formulation (a film, 12 µm wet, was cast on gloss card and dried for 10 seconds at 80°C and 1 hour at room temperature) was measured by putting the measuring device on the sample and reading the values at 20°and 60°. Measuring was done at least 3 times on various spots of the sample and an average value is given.

(9) Anti-blocking

The degree of blocking of a coating against the same coating i.e. lacquer to lacquer (UL) or lacquer to backside of the substrate (UB) was assessed with a Koehler Block tester (ex Instrument Company Inc.). The blocking resistance was measured after 3 days in an oven at 52°C under a pressure of 1 kg/cm$^2$.

Printed substrates prepared with a 12 µm wet coating of for example an ink formulation were cut into small pieces of 30 x 100 mm and folded twice so that lacquer against lacquer and lacquer against substrate backside was tested. The degree of blocking was determined on the ease of pulling the two test specimens apart and assessing the coating for any damage. (5 = very good, entirely separated and undamaged. 4 = fair, some sticking hardly any damage. 3 = mediocre. 2 = poor. 1 = very poor, stuck together, once pulled apart, they were both completely damaged.)

Formulation & coating of Comparative Example 1 & Example 2:

To Comparative Example 1 or Example 2 (40 g) was added ammonia (25%) (0.5 g for Comparative Example 1, 0.4 g for Example 2, water (3 g), Flexiverse Blue 15:3 type BFD1531 (pigment, 2 g, ex Sun Chemicals) and ADH (0.47 g only to Example 2). A 12µm thick wet film of the formulation was cast onto Corona treated MB400 film (Bicor, ex Exxon Mobil). This was dried for 10 seconds at 80°C, followed by 24 hours at 52°C before testing the resultant coating. The results are shown in Table 2 below and show the effect of crosslinking.

Table 2

| | Comparative Example 1 | Example 2 |
|---|---|---|
| (1) Adhesion with Sellotape™ | 3 | 4 |
| (1) Adhesion with ScotchMagic™ tape | 4 | 5 |
| (2) Wet wrinkle no exposure | 3 | 4 |
| (2) Wet wrinkle with water exposure | 1 | 3 |
| (3) Satra rubs 100 rotations | 1 | Not tested |
| (3) Satra rubs 250 rotations | 1 | 4 |
| (3) Satra rubs 500 rotations | Not tested | 4 |

Formulation & Coating of Comparative Example 1. Example 3 and Example 4:

To Comparative Example 1, Example 3 or Example 4 (100 g) was added ammonia (2 g, 25%), water (9 g for Comparative Example 1, 18 g for Example 3 or Example 4), Flexiverse Blue 15:3 type BFD1531 (5 g), ADH (0g or 0.7 g) and MethylDiGlycol (M DG, 3 g).

For (2) the wet wrinkle test: a 12µm thick wet film formulation was cast onto Corona treated white polyurethane (PE) film. This was dried for 10 seconds at 80°C, 1 day at 52°C and 3 days at room temperature before testing the resultant coating.

For (4) the chemical resistances test, a 120 µm thick wet film formulation was cast onto Leneta test cards, dried for 1 day at room temperature, 1 day at 52°C and 5 days at room temperature before testing the resultant coating. The results are shown in Table 3 below and show the effect of crosslinking in just the vinyl oligomer phase and both the vinyl oligomer and polymer phase.

Table 3

| | Comparative Example 1 | Example 3 | | Example 4 | |
|---|---|---|---|---|---|
| | No ADH | No ADH | With ADH | No ADH | With ADH |
| (2) Wet wrinkle with exposure | 1 | 1 | 4 | 1 | 4 |
| (4) 1% NaOH 3 (min) | 1 | 1 | 4 | 1 | 4 |

(continued)

|  | Comparative Example 1 | Example 3 | | Example 4 | |
|---|---|---|---|---|---|
|  | No ADH | No ADH | With ADH | No ADH | With ADH |
| (4) 50% EtOH 5 (min) | 2 | 2 | 3 | 2 | 3 |
| (4) CIF detergent 5 (min) | 2 | 3 | 4 | 3 | 5 |

Formulation & Coating for Example 2 and Comparative Example 5:

To Example 2 or Comparative Example 5 (100g) was added ammonia (2 g, 25%) water (7 g, Example 2 only), Flexiverse Blue 15:3 type BFD1531 (5 g), ADH (0.4 g) and MethylDiGlycol (3 g).

For (2) the wet wrinkle test: a 12µm thick wet film formulation was cast onto Corona treated white PE film. This was dried for 10 seconds at 80°C, 1 day at 52°C and 3 days at room temperature before testing the resultant coating.

For (4) the chemical resistances test, a 12 µm thick wet film formulation was cast onto a Leneta test chart and dried for 1 day at 52°C and 7 days at room temperature before testing the resultant coating. The results are shown in Table 4 below and show the effect of having too much αMS.

Table 4

|  | Example 2 | Comparative Example 5 |
|---|---|---|
| (2) Wet wrinkle no exposure | 4 | 3 |
| (2) Wet wrinkle with exposure | 2 | 1 |
| (4) 50% EtOH 30 seconds | 4 | 2 |

Formulation & Coating for Example 6, Comparative Example 7, Example 8 and Comparative Example 9:

To Example 6 (96.7 g) was added MethylDiGlycol (2.9 g) and ADH (0.42 g).

To Comparative Example 7 (88.0 g) was added water (8.8 g), MethylDiGlycol (2.6 g) and ADH (0.5 g).

Example 8 was diluted to 36.9% solids. To the diluted Example 8 (100 g) was added ADH (0.2 g) and Flexiverse Blue 15:3 type BFD1531 (44.3 g)

To Comparative Example 9 (100.0 g) was added adipic acid dihydrazide (0.2 g) and Flexiverse Blue 15:3 type BFD1531 (49.9 g)

For (4) the chemical resistances test, Comparative Example 7 was cast as a 100 µm thick wet film formulation onto a Leneta test chart and Example 6 was cast as a 120 µm thick wet film formulation onto a Leneta test chart to give the same dry film thickness. The films were dried for 1 day at room temperature, followed by 3 days at 52°C and 1 day at room temperature before testing the resultant coating.

Comparative Example 9 and Example 8 formulations were cast as a 120 µm thick wet film formulation onto a Leneta test chart. The films were dried for 4 hrs at room temperature, followed by 3 days at 52°C and one week at room temperature before testing the resultant coating.

The results are shown in Table 5 below and show the difference between using bulk and emulsion polymerisation for making the vinyl oligomer A.

Table 5

|  | Comparative Example 7 | Example 6 |
|---|---|---|
| (4) 1% NaOH 10 (s) | 3-4 | 4-5 |
| (4) 1% NaOH 30 (s) | 2 | 4-5 |
| (4) 1% NaOH 1 (min) | 2 | 4 |
| (4) 1% NaOH 3 (min) | 1 | 4 |
| (4) 50% EtOH 1 (min) | 2 | 3 |

(continued)

|  | Comparative Example 9 | Example 8 |
|---|---|---|
| (4) Water 3 days | 4 | 5 |
| (4) Squalene 3 days | 3 | 4 |
| (4) Butter 3 days | 2 | 2 |
| (4) Coffee 3 days | 3 | 3 |
| (4) Tea 3 days | 4 | 5 |
| (4) 50% Ethanol 1 (min) | 1 | 1 |
| (4) 1% NaOH 1 (min) | 2 | 4 |
| (4) CIF detergent 1 (min) | 2 | 5 |

Formulation of a let-down from Example 10 and Comparative Example 11:

To Example 10 (300 g) or Comparative Example 11 (300 g) was added ammonia (25%) (1.0g for Example 10, 2.0 g for Comparative Example 11), RheoCoat 35 (2.7 g only to Comparative Example 11, ex Coatex), water (24.5 g for Example 10, 7.4 g for Comparative Example 11) and ADH (0.6 g for Example 10, 0.7 g for Comparative Example 11).

Formulation of an ink from the let-downs from Example 10 and Comparative Example 11:

To 210 g of each let-down formulated above was added Flexiverse Blue 15:3 type BFD1531 (90 g) and water (2.0 g Example 10 only). The inks were then used in (5) RK coater and (6) hand coater trials as well as (7) reversibility, (8) gloss and (9) anti-blocking tests. The results are shown in Table 6 below and show the difference between using bulk and emulsion polymerisation for making the vinyl oligomer A.

Table 6

|  | Comparative Example 11 | Example 10 |
|---|---|---|
| RK Coater on PE white, Corona treated, speed=15m/min | | |
| (5.1) Wetting | 3 | 4 |
| (5.2) Transfer | 3 | 3 |
| (5.3) cleanability | 3 | 3 |
| Flexo handcoater on PE white, Corona treated | | |
| (6.1) Wetting 140/13 | 2 | 4 |
| (6.2) Transfer 140/13 | 2 | 4 |
| (6.1) Wetting 400/2.8 | 2 | 3-4 |
| (6.2) Transfer 400/2.8 | 2 | 4 |
| Flexo handcoater on China clay coated board | | |
| (6.1) Wetting 140/5 | 2-3 | 3 |
| (6.2) Transfer 140/5 | 3 | 4 |
| (6.1) Wetting 400/2.8 | 3 | 3 |
| (6.2) Transfer 400/2.8 | 3 | 4-5 |

(continued)

| Flexo handcoater on cardboard | | |
|---|---|---|
| (6.1) Wetting 140/5 | 3 | 3 |
| (6.2) Transfer 140/5 | 3 | 4-5 |
| (6.1) Wetting 400/2.8 | 3 | 3 |
| (6.2) Transfer 400/2.8 | 3 | 3 |
| | | |
| (7) Reversibility (seconds) | 10 | 10 |
| (8) Gloss (20°/60°) | 11/54 | 14/59 |
| (9) Anti-blocking | | |
| On MB400 UL | 1 | 1 |
| On MB400 L/B | 3-4 | 3-4 |

**Claims**

1. An aqueous composition comprising:

   i) at least a crosslinkable vinyl oligomer A with a weight average molecular weight in the range of from 1000 to 80,000 Daltons obtained by bulk polymerisation of:

   (a) 5 to 45 wt% of vinyl monomers bearing ionic or potentially ionic water-dispersing groups;
   (b) 0 to 30 wt% of vinyl monomers bearing non-ionic water-dispersing groups;
   (c) 2 to 25 wt% of vinyl monomers bearing crosslinkable groups;
   (d) 0 to 40 wt% of $\alpha$-methyl styrene;
   (e) 10 to 93 wt% of vinyl monomers not in (a), (b), (c) or (d);
   where (a) + (b) + (c) + (d) + (e) = 100%; and

   ii) at least a vinyl polymer B with a weight average molecular weight $\geq$ 5000 Daltons, obtained by polymerisation in the presence of vinyl oligomer A of:

   (f) 0 to 5 wt% of vinyl monomers bearing ionic or potentially ionic water-dispersing groups;
   (g) 0 to 20 wt% of vinyl monomers bearing non-ionic water-dispersing groups;
   (h) 0 to 15 wt% of vinyl monomers bearing crosslinkable groups;
   (i) 60 to 100 wt% of vinyl monomers not in (f), (g) or (h);

   where (f) + (g) + (h) + (i) = 100%;
   where the ratio of vinyl oligomer A to vinyl polymer B is in the range of from 5:95 to 95:5;
   where polymer B is more hydrophobic than vinyl oligomer A;
   where the weight average molecular weight of vinyl polymer B is more than the weight average molecular weight of vinyl oligomer A;
   iii) 0 to 20 wt% of co-solvent; and
   iv) 30 to 90 wt% of water;

   where i) + ii) + iii) + iv) = 100%.

2. A composition according to claim 1 wherein vinyl polymer B has a weight average molecular weight $\geq$ 60,000 Daltons.

3. A composition according to any one of the preceding claims wherein up to 50 wt% of vinyl polymer B is prepared by bulk polymerisation.

4. A composition according to any one of the preceding claims wherein the Tg of vinyl polymer B is at least 40°C less than the Tg of vinyl oligomer A.

5. A composition according to any one of the preceding claims comprising:

  i) at least a crosslinkable vinyl oligomer A with a weight average molecular weig ht in the range of from 8000 to 30,000 Daltons obtained by bulk polymerisation of:

  (a) 20 to 40 wt% of vinyl monomers bearing ionic or potentially ionic water-dispersing groups;
  (b) 0 to 10 wt% of vinyl monomers bearing non-ionic water-dispersing groups;
  (c) 4 to 10 wt% of vinyl monomers bearing crosslinkable groups, more preferably DAAM;
  (d) 15 to 35 wt% of $\alpha$-methyl styrene;
  (e) 5 to 61 wt% of vinyl monomers not in (a), (b), (c) or (d);
  where (a) + (b) + (c) + (d) + (e) = 100%; and

  ii) at least a vinyl polymer B with a weight average molecular weight $\geq$ 150,000 Daltons, obtained by polymerisation in the presence of vinyl oligomer A of:

  (f) 0 to 3 wt% of vinyl monomers bearing ionic or potentially ionic water-dispersing groups;
  (g) 0 to 10 wt% of vinyl monomers bearing non-ionic water-dispersing groups;
  (h) 1 to 8 wt% of vinyl monomers bearing crosslinkable groups, more preferably DAAM;
  (i) 79 to 98 wt% of vinyl monomers not in (f), (g) or (h);

  where (f) + (g) + (h) + (i) = 100%;
  where the ratio of vinyl oligomer A to vinyl polymer B is in the range of from 20:80 to 60:40;
  where polymer B is more hydrophobic than vinyl oligomer A;
  where the weight average molecular weight of vinyl polymer B is more than the weight
  average molecular weight of vinyl oligomer A;
  iii) 0 to 20 wt% of co-solvent; and
  iv) 30 to 90 wt% of water;

  where i) + ii) + iii) + iv) = 100%.

6. A composition according to any one of claims 1 to 4 comprising:

  i) at least a crosslinkable vinyl oligomer A with a weight average molecular weight in the range of from 8000 to 30,000 Daltons obtained by bulk polymerisation of:

  (a) 8 to 15 wt% of vinyl monomers bearing ionic or potentially ionic water-dispersing groups;
  (b) 1 to 10 wt% of vinyl monomers bearing non-ionic water-dispersing groups;
  (c) 4 to 10 wt% of vinyl monomers bearing crosslinkable groups,
  more preferably DAAM;
  (d) < 5 wt% of $\alpha$-methyl styrene;
  (e) 65 to 87 wt% of vinyl monomers not in (a), (b), (c) or (d);
  where (a) + (b) + (c) + (d) + (e) = 100%; and

  ii) at least a vinyl polymer B with a weight average molecular weight $\geq$ 150,000 Daltons, obtained by polymerisation in the presence of vinyl oligomer A of:

  (f) 0 to 3 wt% of vinyl monomers bearing ionic or potentially ionic water-dispersing groups;
  (g) 0 to 10 wt% of vinyl monomers bearing non-ionic water-dispersing groups;
  (h) 1 to 8 wt% of vinyl monomers bearing crosslinkable groups,
  more preferably DAAM;
  (i) 79 to 98 wt% of vinyl monomers not in (f), (g) or (h);

  where (f) + (g) + (h) + (i) = 100%;
  where the ratio of vinyl oligomer A to vinyl polymer B is in the range of from 20:80 to 60:40;
  where polymer B is more hydrophobic than vinyl oligomer A;
  where the weight average molecular weight of vinyl polymer B is more than the weight

average molecular weight of vinyl oligomer A;
iii) 0 to 20 wt% of co-solvent; and
iv) 30 to 90 wt% of water;

where i) + ii) + iii) + iv) = 100%.

7. A composition according to any one of the preceding claims additionally comprising crosslinkable vinyl oligomer C with a weight average molecular weight in the range of from 1000 to 80,000 Daltons obtained by polymerisation of:

(k) 0 to 4.9 wt% of vinyl monomers bearing ionic or potentially ionic water-dispersing groups;
(l) 0 to 30 wt% of vinyl monomers bearing non-ionic water-dispersing groups;
(m) 0 to 20 wt% of vinyl monomers bearing crosslinkable groups;
(n) 45.1 to 100 wt% of vinyl monomers not in (k), (l) or (m);

where (k) + (l) + (m) + (n) = 100%; and
where vinyl polymer B is more hydrophobic than vinyl oligomer C; and
where the weight average molecular weight of vinyl polymer B is more than the weight average molecular weight of vinyl oligomer C.

8. A composition according to claim 7 wherein vinyl oligomer C is more hydrophobic than vinyl oligomer A.

9. A composition according to any one of the preceding claims additionally comprising at least one crosslinking agent.

10. A composition according to any one of the preceding claims with a reversibility within three minutes.

11. A process X for preparing a composition according to any one of claims 1 to 10 comprising steps:

I) bulk polymerising vinyl monomers (a), (b), (c), (d) and (e) to obtain vinyl oligomer A;
II) polymerising up to 50 wt% of vinyl monomers (f), (g), (h) and (i) in the presence of vinyl oligomer A prepared in step 1) to form vinyl polymer B;
III) dispersing vinyl oligomer A, vinyl polymer B and remaining monomers (f), (g), (h) and (i) in water, optionally in the presence of a co-solvent and/or neutralising agent; and
IV) polymerising remaining monomers (f), (g), (h) and (i).

12. A process Y for preparing a composition according to any one of claims 1 to 10 comprising steps:

I) bulk polymerising vinyl monomers (a), (b), (c), (d) and (e) to obtain vinyl oligomer A;
II) dispersing vinyl oligomer A in water, optionally in the presence of a co-solvent and/or neutralising agent;
III) polymerising vinyl monomers (f), (g), (h) and (i) in the presence of vinyl oligomer A prepared in step II) to form vinyl polymer B.

13. A process Z for preparing a composition according to any one of claims 1 to 10 comprising steps:

I) bulk polymerising vinyl monomers (a), (b), (c), (d) and (e) to obtain vinyl oligomer A;
II) adding vinyl monomers (f), (g), (h) and (i) to vinyl oligomer A prepared in step I;
III) dispersing vinyl oligomer A and vinyl monomers (f), (g), (h) and (i), in water, optionally in the presence of a co-solvent and/or neutral ising agent;
IV) polymerising vinyl monomers (f), (g), (h) and (i) in the presence of vinyl oligomer A prepared in step III) to form vinyl polymer B.

14. A substrate carrying a coating comprising a composition according to any one of the preceding claims 1 to 9.

15. A printing ink comprising a composition according to any of claims 1 to 10.

16. An over print lacquer comprising a composition according to any one of claims 1 to 10.

**Patentansprüche**

1.  Wäßrige Zusammensetzung, enthaltend:

    i) mindestens ein vernetzbares Vinyloligomer A mit einem gewichtsmittleren Molekulargewicht im Bereich von 1000 bis 80.000 Dalton, erhalten durch Massepolymerisation von:

    (a) 5 bis 45 Gew.-% Vinylmonomeren mit ionischen oder potentiell ionischen wasserdispergierenden Gruppen;
    (b) 0 bis 30 Gew.-% Vinylmonomeren mit nichtionischen wasserdispergierenden Gruppen;
    (c) 2 bis 25 Gew.-% Vinylmonomeren mit vernetzbaren Gruppen;
    (d) 0 bis 40 Gew.-% $\alpha$-Methylstyrol;
    (e) 10 bis 93 Gew.-% Vinylmonomeren, die nicht unter (a), (b), (c) oder (d) fallen;
    wobei (a) + (b) + (c) + (d) + (e) = 100%; und

    ii) mindestens ein Vinylpolymer B mit einem gewichtsmittleren Molekulargewicht ≥5000 Dalton, erhalten durch Polymerisation von

    (f) 0 bis 5 Gew.-% Vinylmonomeren mit ionischen oder potentiell ionischen wasserdispergierenden Gruppen;
    (g) 0 bis 20 Gew.-% Vinylmonomeren mit nichtionischen wasserdispergierenden Gruppen;
    (h) 0 bis 15 Gew.-% Vinylmonomeren mit vernetzbaren Gruppen;
    (i) 60 bis 100 Gew.-% Vinylmonomeren, die nicht unter (f), (g) oder (h) fallen;

    wobei (f) + (g) + (h) + (i) = 100%;
    in Gegenwart von Vinyloligomer A;
    wobei das Verhältnis von Vinyloligomer A zu Vinylpolymer B im Bereich von 5:95 bis 95:5 liegt;
    wobei Polymer B hydrophober ist als Vinyloligomer A;
    wobei das gewichtsmittlere Molekulargewicht von Vinylpolymer B über dem gewichtsmittleren Molekulargewicht von Vinyloligomer A liegt;
    iii) 0 bis 20 Gew.-% Cosolvens und
    iv) 30 bis 90 Gew.-% Wasser;

    wobei i) + ii) + iii) + iv) = 100%.

2.  Zusammensetzung nach Anspruch 1, in der das Vinylpolymer B ein gewichtsmittleres Molekulargewicht ≥60.000 Dalton aufweist.

3.  Zusammensetzung nach einem der vorhergehenden Ansprüche, in der bis zu 50 Gew.-% von Vinylpolymer B durch Massepolymerisation hergestellt werden.

4.  Zusammensetzung nach einem der vorhergehenden Ansprüche, in der die Tg von Vinylpolymer B mindestens 40°C unter der Tg von Vinyloligomer A liegt.

5.  Zusammensetzung nach einem der vorhergehenden Ansprüche, enthaltend:

    i) mindestens ein vernetzbares Vinyloligomer A mit einem gewichtsmittleren Molekulargewicht im Bereich von 8000 bis 30.000 Dalton, erhalten durch Massepolymerisation von:

    (a) 20 bis 40 Gew.-% Vinylmonomeren mit ionischen oder potentiell ionischen wasserdispergierenden Gruppen;
    (b) 0 bis 10 Gew.-% Vinylmonomeren mit nichtionischen wasserdispergierenden Gruppen;
    (c) 4 bis 10 Gew.-% Vinylmonomeren mit vernetzbaren Gruppen, besonders bevorzugt DAAM;
    (d) 15 bis 35 Gew.-% $\alpha$-Methylstyrol;
    (e) 5 bis 61 Gew.-% Vinylmonomeren, die nicht unter (a), (b), (c) oder (d) fallen;
    wobei (a) + (b) + (c) + (d) + (e) = 100%; und

    ii) mindestens ein Vinylpolymer B mit einem gewichtsmittleren Molekulargewicht ≥150.000 Dalton, erhalten durch Polymerisation von

(f) 0 bis 3 Gew.-% Vinylmonomeren mit ionischen oder potentiell ionischen wasserdispergierenden Gruppen;
(g) 0 bis 10 Gew.-% Vinylmonomeren mit nichtionischen wasserdispergierenden Gruppen;
(h) 1 bis 8 Gew.-% Vinylmonomeren mit vernetzbaren Gruppen;
(i) 79 bis 98 Gew.-% Vinylmonomeren, die nicht unter (f), (g) oder (h) fallen;

wobei (f) + (g) + (h) + (i) = 100%;
in Gegenwart von Vinyloligomer A;
wobei das Verhältnis von Vinyloligomer A zu Vinylpolymer B im Bereich von 20:80 bis 60:40 liegt;
wobei Polymer B hydrophober ist als Vinyloligomer A;
wobei das gewichtsmittlere Molekulargewicht von Vinylpolymer B über dem gewichtsmittleren Molekulargewicht von Vinyloligomer A liegt;
iii) 0 bis 20 Gew.-% Cosolvens und
iv) 30 bis 90 Gew.-% Wasser;

wobei i) + ii) + iii) + iv) = 100%.

6. Zusammensetzung nach einem der Ansprüche 1 bis 4, enthaltend:

i) mindestens ein vernetzbares Vinyloligomer A mit einem gewichtsmittleren Molekulargewicht im Bereich von 8000 bis 30.000 Dalton, erhalten durch Massepolymerisation von:

(a) 8 bis 15 Gew.-% Vinylmonomeren mit ionischen oder potentiell ionischen wasserdispergierenden Gruppen;
(b) 1 bis 10 Gew.-% Vinylmonomeren mit nichtionischen wasserdispergierenden Gruppen;
(c) 4 bis 10 Gew.-% Vinylmonomeren mit vernetzbaren Gruppen, besonders bevorzugt DAAM;
(d) <5 Gew.-% $\alpha$-Methylstyrol;
(e) 65 bis 87 Gew.-% Vinylmonomeren, die nicht unter (a), (b), (c) oder (d) fallen;

wobei (a) + (b) + (c) + (d) + (e) = 100%; und
ii) mindestens ein Vinylpolymer B mit einem gewichtsmittleren Molekulargewicht ≥150.000 Dalton, erhalten durch Polymerisation von

(f) 0 bis 3 Gew.-% Vinylmonomeren mit ionischen oder potentiell ionischen wasserdispergierenden Gruppen;
(g) 0 bis 10 Gew.-% Vinylmonomeren mit nichtionischen wasserdispergierenden Gruppen;
(h) 1 bis 8 Gew.-% Vinylmonomeren mit vernetzbaren Gruppen, besonders bevorzugt DAAM;
(i) 79 bis 98 Gew.-% Vinylmonomeren, die nicht unter (f), (g) oder (h) fallen;

wobei (f) + (g) + (h) + (i) = 100%;
in Gegenwart von Vinyloligomer A;
wobei das Verhältnis von Vinyloligomer A zu Vinylpolymer B im Bereich von 20:80 bis 60:40 liegt;
wobei Polymer B hydrophober ist als Vinyloligomer A;
wobei das gewichtsmittlere Molekulargewicht von Vinylpolymer B über dem gewichtsmittleren Molekulargewicht von Vinyloligomer A liegt;
iii) 0 bis 20 Gew.-% Cosolvens und
iv) 30 bis 90 Gew.-% Wasser;

wobei i) + ii) + iii) + iv) = 100%.

7. Zusammensetzung nach einem der vorhergehenden Ansprüche, zusätzlich enthaltend vernetzbares Vinyloligomer C mit einem gewichtsmittleren Molekulargewicht im Bereich von 1000 bis 80.000 Dalton, erhalten durch Polymerisation von:

(k) 0 bis 4,9 Gew.-% Vinylmonomeren mit ionischen oder potentiell ionischen wasserdispergierenden Gruppen;
(l) 0 bis 30 Gew.-% Vinylmonomeren mit nichtionischen wasserdispergierenden Gruppen;
(m) 0 bis 20 Gew.-% Vinylmonomeren mit vernetzbaren Gruppen;
(n) 45,1 bis 100 Gew.-% Vinylmonomeren, die nicht unter (k), (1) oder (m) fallen;

wobei (k) + (l) + (m) + (n) = 100%; und

wobei Vinylpolymer B hydrophober ist als Vinyloligomer C; und

wobei das gewichtsmittlere Molekulargewicht von Vinylpolymer B über dem gewichtsmittleren Molekulargewicht von Vinyloligomer C liegt.

**8.** Zusammensetzung nach Anspruch 7, in der Vinyloligomer C hydrophober ist als Vinyloligomer A.

**9.** Zusammensetzung nach einem der vorhergehenden Ansprüche, zusätzlich enthaltend mindestens einen Vernetzer.

**10.** Zusammensetzung nach einem der vorhergehenden Ansprüche mit einer Reversibilität innerhalb von drei Minuten.

**11.** Verfahren X zur Herstellung einer Zusammensetzung nach einem der Ansprüche 1 bis 10, bei dem man:

I) Vinylmonomere (a), (b), (c), (d) und (e) in Masse polymerisiert, wobei man Vinyloligomer A erhält;
II) in Gegenwart von in Schritt I) hergestelltem Vinyloligomer A bis zu 50 Gew.-% Vinylmonomere (f), (g), (h) und (i) polymerisiert, wobei man Vinylpolymer B erhält;
III) Vinyloligomer A, Vinylpolymer B und verblieben Monomere (f), (g), (h) und (i) in Wasser dispergiert, gegebenenfalls in Gegenwart eines Cosolvens und/oder Neutralisationsmittels; und
IV) verbliebene Monomere (f), (g), (h) und (i) polymerisiert.

**12.** Verfahren Y zur Herstellung einer Zusammensetzung nach einem der Ansprüche 1 bis 10, bei dem man:

I) Vinylmonomere (a), (b), (c), (d) und (e) in Masse polymerisiert, wobei man Vinyloligomer A erhält;
II) Vinyloligomer A in Wasser dispergiert, gegebenenfalls in Gegenwart eines Cosolvens und/oder Neutralisationsmittels;
III) in Gegenwart von in Schritt II) hergestelltem Vinyloligomer A Vinylmonomere (f), (g), (h) und (i) polymerisiert, wobei man Vinylpolymer B erhält.

**13.** Verfahren Z zur Herstellung einer Zusammensetzung nach einem der Ansprüche 1 bis 10, bei dem man:

I) Vinylmonomere (a), (b), (c), (d) und (e) in Masse polymerisiert, wobei man Vinyloligomer A erhält;
II) in Schritt I) hergestelltes Vinyloligomer A mit Vinylmonomeren (f), (g), (h) und (i) versetzt;
III) Vinyloligomer A und Vinylmonomere (f), (g), (h) und (i) in Wasser dispergiert, gegebenenfalls in Gegenwart eines Cosolvens und/oder Neutralisationsmittels; und
IV) Vinylmonomere (f), (g), (h) und (i) in Gegenwart von in Schritt III) hergestelltem Vinyloligomer A polymerisiert, wobei man Vinylpolymer B erhält.

**14.** Substrat mit einer Beschichtung, umfassend eine Zusammensetzung nach einem der vorhergehenden Ansprüche 1 bis 9.

**15.** Druckfarbe, umfassend eine Zusammensetzung nach einem der Ansprüche 1 bis 10.

**16.** Überdrucklack, umfassend eine Zusammensetzung nach einem der Ansprüche 1 bis 10.

**Revendications**

**1.** Composition aqueuse comprenant :

i) au moins un oligomère de vinyle réticulable A avec une masse moléculaire moyenne en poids dans la plage de 1000 à 80 000 daltons obtenu par polymérisation en masse :

(a) de 5 à 45 % en poids de monomères de vinyle qui portent des groupes de dispersion dans l'eau ioniques ou éventuellement ioniques ;
(b) de 0 à 30 % en poids de monomères de vinyle qui portent des groupes de dispersion dans l'eau non ioniques ;
(c) de 2 à 25 % en poids de monomères de vinyle qui portent des groupes réticulables ;
(d) de 0 à 40 % en poids d'alpha-méthylstyrène ;
(e) de 10 à 93 % en poids de monomères de vinyle autres que ceux en (a), en (b), en (c) ou en (d) ;

où (a) + (b) + (c) + (d) + (e) = 100 % ; et
ii) au moins un polymère de vinyle B avec une masse moléculaire moyenne en poids égale ou supérieure à 5000 daltons, obtenu par polymérisation en présence d'un oligomère de vinyle A de :

> (f) de 0 à 5 % en poids de monomères de vinyle qui portent des groupes de dispersion dans l'eau ioniques ou éventuellement ioniques ;
> (g) de 0 à 20 % en poids de monomères de vinyle qui portent des groupes de dispersion dans l'eau non ioniques ;
> (h) de 0 à 15 % en poids de monomères de vinyle qui portent des groupes réticulables ;
> (i) de 60 à 100 % en poids de monomères de vinyle autres que ceux en (f), en (g) ou en (h) ;

où (f) + (g) + (h) + (i) = 100 % ;
où le rapport de l'oligomère de vinyle A au polymère de vinyle B se situe dans la plage de 5:95 à 95:5 ;
où le polymère B est plus hydrophobe que l'oligomère de vinyle A ;
où la masse moléculaire moyenne en poids du polymère de vinyle B est supérieure à la masse moléculaire moyenne en poids de l'oligomère de vinyle A ;
iii) de 0 à 20 % en poids de cosolvant ; et
iv) de 30 à 90 % en poids d'eau ;

où i) + ii) + iii) + iv) = 100 %.

2. Composition selon la revendication 1, dans laquelle le polymère de vinyle B possède une masse moléculaire moyenne en poids égale ou supérieure à 60 000 daltons.

3. Composition selon l'une quelconque des revendications précédentes, dans laquelle jusqu'à 50 % en poids du polymère de vinyle B est préparé par polymérisation en masse.

4. Composition selon l'une quelconque des revendications précédentes, dans laquelle la Tg du polymère de vinyle B est au moins 40 °C inférieure à celle de la Tg de l'oligomère A.

5. Composition selon l'une quelconque des revendications précédentes, qui comprend :

> i) au moins un oligomère de vinyle réticulable A avec une masse moléculaire moyenne en poids dans la plage de 8000 à 30 000 daltons, obtenu par polymérisation en masse :

> > (a) de 20 à 40 % en poids de monomères de vinyle qui portent des groupes de dispersion dans l'eau ioniques ou éventuellement ioniques ;
> > (b) de 0 à 10 % en poids de monomères de vinyle qui portent des groupes de dispersion dans l'eau non ioniques ;
> > (c) de 4 à 10 % en poids de monomères de vinyle qui portent des groupes réticulables, plus préférablement du DAAM ;
> > (d) de 15 à 35 % en poids d'alpha-méthylstyrène ;
> > (e) de 5 à 61 % en poids de monomères de vinyle autres que ceux en (a), en (b), en (c) ou en (d) ;

> où (a) + (b) + (c) + (d) + (e) = 100 % ; et
> ii) au moins un polymère de vinyle B avec une masse moléculaire moyenne en poids égale ou supérieure à 150 000 daltons, obtenu par polymérisation en présence d'un oligomère de vinyle A de :

> > (f) de 0 à 3 % en poids de monomères de vinyle qui portent des groupes de dispersion dans l'eau ioniques ou éventuellement ioniques ;
> > (g) de 0 à 10 % en poids de monomères de vinyle qui portent des groupes de dispersion dans l'eau non ioniques ;
> > (h) de 1 à 8 % en poids de monomères de vinyle qui portent des groupes réticulables, plus préférablement du DAAM ;
> > (i) de 79 à 98 % en poids de monomères de vinyle autres que ceux en (f), en (g) ou en (h) ;

> où (f) + (g) + (h) + (i) = 100 % ;
> où le rapport de l'oligomère de vinyle A au polymère de vinyle B se situe dans la plage de 20:80 à 60:40 ;

où le polymère B est plus hydrophobe que l'oligomère de vinyle A ;
ou la masse moléculaire moyenne en poids du polymère de vinyle B est supérieure à la masse moléculaire moyenne en poids de l'oligomère de vinyle A ;
iii) de 0 à 20 % en poids de cosolvant ; et
iv) de 30 à 90 % en poids d'eau ;

où i) + ii) + iii) + iv) = 100 %.

6. Composition selon l'une quelconque des revendications 1 à 4, qui comprend :

i) au moins un oligomère de vinyle réticulable A avec une masse moléculaire moyenne en poids dans la plage de 8000 à 30 000 daltons, obtenu par polymérisation en masse :

(a) de 8 à 15 % en poids de monomères de vinyle qui portent des groupes de dispersion dans l'eau ioniques ou éventuellement ioniques ;
(b) de 1 à 10 % en poids de monomères de vinyle qui portent des groupes de dispersion dans l'eau non ioniques ;
(c) de 4 à 10 % en poids de monomères de vinyle qui portent des groupes réticulables, plus préférablement du DAAM ;
(d) moins de 5 % en poids d'alpha-méthylstyrène ;
(e) de 65 à 87 % en poids de monomères de vinyle autres que ceux en (a), en (b), en (c) ou en (d) ;

où (a) + (b) + (c) + (d) + (e) = 100 % ; et
ii) au moins un polymère de vinyle B avec une masse moléculaire moyenne en poids égale ou supérieure à 150 000 daltons, obtenu par polymérisation en présence d'un oligomère de vinyle A de :

(f) de 0 à 3 % en poids de monomères de vinyle qui portent des groupes de dispersion dans l'eau ioniques ou éventuellement ioniques ;
(g) de 0 à 10 % en poids de monomères de vinyle qui portent des groupes de dispersion dans l'eau non ioniques ;
(h) de 1 à 8 % en poids de monomères de vinyle qui portent des groupes réticulables, plus préférablement du DAAM ;
(i) de 79 à 98 % en poids de monomères de vinyle autres que ceux en (f), en (g) ou en (h) ;

où (f) + (g) +(h) +(i) = 100%;
où le rapport de l'oligomère de vinyle A au polymère de vinyle B se situe dans la plage de 20:80 à 60:40 ;
où le polymère B est plus hydrophobe que l'oligomère de vinyle A ;
où la masse moléculaire moyenne en poids du polymère de vinyle B est supérieure à la masse moléculaire moyenne en poids de l'oligomère de vinyle A ;
iii) de 0 à 20 % en poids de cosolvant ; et
iv) de 30 à 90 % en poids d'eau ;
où i) + ii) + iii) + iv) = 100 %.

7. Composition selon l'une quelconque des revendications précédentes qui comprend en outre un oligomère de vinyle réticulable C avec une masse moléculaire moyenne en poids dans la plage de 1000 à 80 000 daltons, obtenu par polymérisation :

(k) de 0 à 4,9 % en poids de monomères de vinyle qui portent des groupes de dispersion dans l'eau ioniques ou éventuellement ioniques ;
(l) de 0 à 30 % en poids de monomères de vinyle qui portent des groupes de dispersion dans l'eau non ioniques ;
(m) de 0 à 20 % en poids de monomères de vinyle qui portent des groupes réticulables ;
(n) de 45,1 à 100 % en poids de monomères de vinyle autres que ceux en (k), en (1) ou en (m) ;

où (k) + (l) + (m) + (n) = 100 % ; et
où le polymère de vinyle B est plus hydrophobe que l'oligomère de vinyle C ; et
où la masse moléculaire moyenne en poids du polymère de vinyle B est supérieure à la masse moléculaire moyenne en poids de l'oligomère de vinyle C .

**8.** Composition selon la revendication 7, dans laquelle l'oligomère de vinyle C est plus hydrophobe que l'oligomère de vinyle A.

**9.** Composition selon l'une quelconque des revendications précédentes, qui comprend en outre au moins un agent de réticulation.

**10.** Composition selon l'une quelconque des revendications précédentes avec une réversibilité en moins de trois minutes.

**11.** Procédé X pour la préparation d'une composition selon l'une quelconque des revendications 1 à 10, qui comprend les étapes :

I) de polymérisation en masse des monomères de vinyle (a), (b), (c), (d) et (e) pour obtenir l'oligomère de vinyle A ;
II) de polymérisation de jusqu'à 50 % en poids des monomères de vinyle (f), (g), (h) et (i) en présence de l'oligomère de vinyle A préparé à l'étape I) pour former le polymère de vinyle B ;
III) de dispersion de l'oligomère de vinyle A, du polymère de vinyle B et des monomères restants (f), (g), (h) et (i) dans l'eau, éventuellement en présence d'un cosolvant et/ou d'un agent de neutralisation ; et
IV) de polymérisation des monomères restants (f), (g), (h) et (i).

**12.** Procédé Y pour la préparation d'une composition selon l'une quelconque des revendications 1 à 10, qui comprend les étapes :

I) de polymérisation en masse des monomères de vinyle (a), (b), (c), (d) et (e) pour obtenir l'oligomère de vinyle A ;
II) de la dispersion de l'oligomère de vinyle A dans l'eau, éventuellement en présence d'un cosolvant et/ou d'un agent de neutralisation ;
III) de polymérisation des monomères de vinyle (f), (g), (h) et (i) en présence de l'oligomère de vinyle A préparé à l'étape II) pour former le polymère de vinyle B .

**13.** Procédé Z pour la préparation d'une composition selon l'une quelconque des revendications 1 à 10, qui comprend les étapes :

I) de polymérisation en masse des monomères de vinyle (a), (b), (c), (d) et (e) pour obtenir l'oligomère de vinyle A ;
II) de l'ajout des monomères de vinyle (f), (g), (h) et (i) à l'oligomère de vinyle A préparé à l'étape I ;
III) de la dispersion de l'oligomère de vinyle A et des monomères de vinyle (f), (g), (h) et (i) dans l'eau, éventuellement en présence d'un cosolvant et/ou d'un agent de neutralisation ;
IV) de polymérisation des monomères de vinyle (f), (g), (h) et (i) en présence de l'oligomère de vinyle A préparé à l'étape III) pour former le polymère de vinyle B.

**14.** Substrat portant un revêtement comprenant une composition selon l'une quelconque des revendications précédentes 1 à 9.

**15.** Encre d'impression comprenant une composition selon l'une quelconque des revendications 1 à 10.

**16.** Vernis de surimpression comprenant une composition selon l'une quelconque des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0758364 A
- EP 0304788 A
- EP 0567128 A
- EP 0296487 A
- US 5173523 A
- EP 0156170 A
- WO 8202387 A
- US 4414370 A
- JP 3135151 B

- DE 10029802
- US 20020013414 A
- US 4526945 A
- US 4680354 A
- EP 0196783 A
- EP 0199436 A
- EP 0788518 A
- WO 8703605 A

### Non-patent literature cited in the description

- **C. HANSCH.** *Accounts of Chemical Research,* 1969, vol. 2, 232-239
- **W.BREMSER et al.** *Prog.Org.Coatings,* 2002, vol. 45, 95

- **N.S. ENIKOLOYPAN et al.** *J. Polym.Chem.Ed,* 1981, vol. 19, 879